Europäisches Patentamt

European Patent Office

Office européen des brevets

(11) Numéro de publication : **0 343 076 B1**

# (12) FASCICULE DE BREVET EUROPEEN

(45) Date de publication du fascicule du brevet :
**20.05.92 Bulletin 92/21**

(51) Int. Cl.$^5$ : **F16N 29/00**, F16N 27/00,
F17D 5/04

(21) Numéro de dépôt : **89401374.7**

(22) Date de dépôt : **19.05.89**

(54) **Dispositif de graissage centralisé à contrôles multiples de fonctionnement.**

(30) Priorité : **20.05.88 FR 8806817**

(43) Date de publication de la demande :
**23.11.89 Bulletin 89/47**

(45) Mention de la délivrance du brevet :
**20.05.92 Bulletin 92/21**

(84) Etats contractants désignés :
**AT BE CH DE ES FR GB GR IT LI LU NL SE**

(56) Documents cités :
**WO-A-83/02991**
**BE-A- 869 332**
**DE-A- 1 675 340**
**FR-A- 2 403 512**
**US-A- 4 228 848**
**US-A- 4 735 286**

(73) Titulaire : **CONSORTIUM DE RECHERCHES POUR L'APPLICATION DES FLUIDES, CRAF**
**Les Clos des 4 Vents**
**F-49650 Brain sur Allonnes (FR)**

(72) Inventeur : **Javelly, Christian**
**Le Moulin de la Motte**
**F-49650 Allonnes (FR)**
Inventeur : **Paris, René**
**8, rue du Bois Brard St.Hilaire St. Florent**
**F-49400 Saumur (FR)**

(74) Mandataire : **Casalonga, Axel**
**BUREAU D.A. CASALONGA - JOSSE**
**Morassistrasse 8**
**W-8000 München 5 (DE)**

## Description

L'invention concerne les dispositifs de graissage centralisé de machines ou de véhicules du type comportant un certain nombre de distributeurs doseurs alimentés en lubrifiant par une canalisation primaire mise sous pression par intermittence, chacun des distributeurs doseurs envoyant un volume déterminé et réglable de lubrifiant vers un des points à graisser par une canalisation secondaire individuelle.

Le problème principal, avec ce genre d'installation, est qu'il est nécessaire à chaque cycle de graissage de vérifier que chacun des pistons doseurs a effectivement effectué sa course réglée individuellement, ce qui suppose à la fois un bon fonctionnement du distributeur et surtout l'absence d'obturation de la canalisation secondaire correspondante.

Dans les dispositifs dits en cascade, les distributeurs doseurs sont en quelque sorte montés en série sur la canalisation primaire, de telle manière que chaque piston doseur ne reçoit la pression de fluide que si le piston doseur précédent a effectué sa course. De cette manière, il suffit de vérifier que la pression s'établit en bout de canalisation primaire pour vérifier du même coup qu'aucune des canalisations secondaires n'est obstruée.

L'inconvénient principal de ce type d'installation est qu'il utilise en général des pistons tiroirs cylindriques ajustés avec grande précision, donc onéreux, et qui créent néanmoins des pertes de charge importantes qui s'additionnent d'un bout à l'autre de la canalisation primaire, d'où la nécessité d'utiliser des pressions d'alimentation importantes, alors qu'en définitive les canalisations secondaires n'utilisent qu'une faible pression.

En outre, ce type d'installation nécessite des connexions assez complexes qui rendent difficile en particulier l'addition de distributeurs supplémentaires dans une installation existante.

On connaît, par ailleurs, un autre type d'installation de graissage centralisé dans lequel chaque distributeur est monté en dérivation sur la canalisation primaire, pour éviter la nécessité de pressions élevées et permettre en même temps l'utilisation de joints d'étanchéité en vue d'une réalisation plus économique, et où la course de chaque piston doseur est contrôlée à l'aide d'un fluide auxiliaire, en l'occurence de l'air comprimé.

Ainsi, l'installation suivant le document FR-A-2 403 512 utilise des pistons doseurs qui, dans une première phase de lubrification du cycle de graissage, envoient le volume de lubrifiant vers le point à graisser, et dans une deuxième phase de réarmement du cycle de graissage, réaspirent le lubrifiant par transvasement depuis l'autre face du piston. Chaque piston de dosage est du type à deux tiges se déplaçant chacune dans une chambre à air d'extrémité fermée par un bouchon de réglage de course, lui-même percé d'un orifice axial de mise à l'atmosphère, une des chambres à air, ou chambre de lubrification, ayant sa mise à l'atmosphère qui se trouve obturée par la tige correspondante lors de la fin de course de lubrification, tandis que l'autre chambre à air, ou chambre de réarmement, a sa mise à l'atmosphère qui se trouve obturée par la tige correspondante lors de la fin de course de réarmement. Toutes les chambres à air de lubrification se trouvent mises en communication les unes avec les autres, l'ensemble étant alimenté en air comprimé à débit contrôlé avec un manocontact unique vérifiant la mise en pression de l'ensemble, tandis que toutes les chambres à air de réarmement sont de la même façon mises en communication les unes avec les autres, alimentées en air comprimé à débit limité et munies d'un autre manocontact commun pour l'ensemble de l'installation.

Toutefois, ce dernier type d'installation, tout comme le précédent, s'il parvient à vérifier la réalité de la course du piston doseur dans les deux sens, et par conséquent l'absence d'obturation de la canalisation secondaire, devient inefficace en cas de fuite sur une des canalisations secondaires. En effet, dans ce cas, le volume voulu de lubrifiant est bien envoyé par le piston doseur correspondant, mais non reçu, ou non entièrement reçu par le point à graisser.

Le but de la présente invention est d'éliminer les inconvénients précédents, c'est-à-dire de réaliser une installation de graissage centralisé qui ne nécessite qu'une pression de fluide modérée, qui soit économique, facile à établir et à modifier, et qui assure tout à la fois le contrôle du bon fonctionnement de chaque piston doseur, la non obturation de chaque canalisation secondaire, et l'absence de fuite de chaque canalisation secondaire.

Selon l'invention, le lubrifiant est envoyé par chaque piston doseur vers un point à graisser à l'aide d'une canalisation secondaire constituée par un tube de faible diamètre disposé, au moins pour certains d'entre eux, à l'intérieur d'un tube enveloppe, l'intervalle entre la canalisation secondaire et le tube enveloppe correspondant étant en communication du côté distributeur avec une chambre à air de fuite, toutes les chambres à air de fuite des divers distributeurs étant elles-mêmes mises en communication entre elles, et avec un manocontact commun de telle manière que le manocontact unique associé à l'ensemble des chambres à air de fuite permettre de contrôler l'absence de fuite de toutes celles de ces canalisations qui sont munies d'un tube enveloppe.

Les tubes enveloppe peuvent être constitués par des tubes réels, ou par de simples percements pratiqués dans le bâti de la machine à graisser, les distributeurs étant de préférence agencés pour se prêter aux deux types de montage.

D'autres particularités de l'invention apparaîtront dans la description qui va suivre d'un mode de réalisation pris comme exemple et représenté sur les dessins annexés, sur lesquels :

la figure 1 est une coupe partielle du distributeur monté avec canalisation extérieure, et

la figure 2 est une coupe correspondante du même distributeur monté avec percements dans un bâti.

L'installation comprend, d'une manière connue, un certain nombre de blocs distributeurs, formés chacun par l'empilement d'un certain nombre d'étages parallélépipédiques, eux-mêmes constitués chacun par un corps 1 et un couvercle 2. La canalisation primaire 3 est constituée par un percement 3 traversant chaque étage d'un bout à l'autre de chaque bloc, les divers blocs étant réunis entre eux par des canalisations extérieures non représentées. Cela permet de monter chaque étage 1-2 en dérivation sur cette canalisation primaire 3 par un orifice d'arrivée 4 qui débouche dans une chambre 5 dans laquelle coulisse un clapet à double effet 6 de type connu, avec une lèvre périphérique 7 et un joint en bout 8. Lorsque la pression de lubrifiant est établie dans la canalisation primaire 3, le lubrifiant pousse le clapet à double effet 6 de manière que son joint en bout 8 vienne obturer le passage axial 9 d'un bouchon étanche 10 refermant la partie supérieure de la chambre 5, laquelle communique par un perçage 11 avec la partie inférieure du piston doseur 12, ce qui soulève ce piston 12 en comprimant un ressort de rappel 13 situé au-dessus de celui-ci. Le lubrifiant situé au-dessus du piston 12 est alors chassé par un percement 14 vers la canalisation secondaire 15 et le point à graisser 16.

La quantité de lubrifiant ainsi envoyée par l'étage considéré est déterminée exactement par la surface utile du piston 12 et sa course, cette dernière étant elle-même déterminée et réglée avec précision par des bouchons d'extrémités 17 et 18 sur lesquels viennent buter respectivement la tige supérieure 19 et la tige inférieure 20 solidaires du piston 12, et coulissant respectivement dans des alésages formant des chambres 21 et 22 refermées par les bouchons 17 et 18. Il suffit donc de changer la longueur de l'un ou l'autre des bouchons 17 et 18, ou des deux, pour modifier le volume exact de lubrifiant envoyé à chaque cycle de graissage.

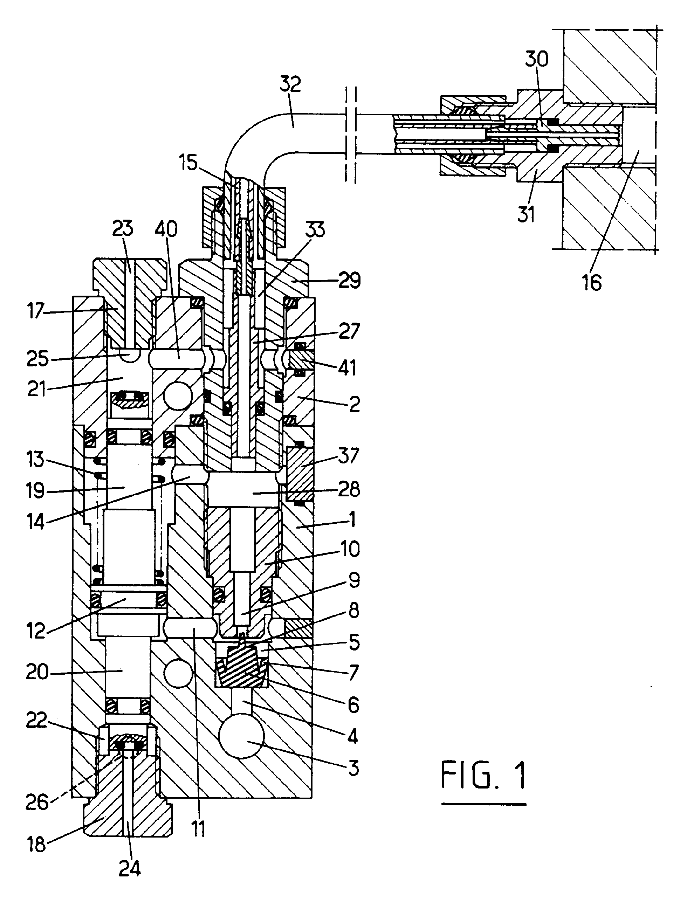

Naturellement, après la phase de lubrification correspondant à la mise en pression de la canalisation primaire 3 par le lubrifiant, un dispositif connu décharge complètement la pression dans cette canalisation, au cours d'une phase de réarmement, au cours de laquelle la pression située sous le piston 12 et maintenue par la compression du ressort 13 repousse le clapet à double effet 6 vers le bas, dans la position représentée sur la figure 1. Le lubrifiant ainsi chassé par le percement 11 s'échappe alors par le passage 9 et le percement 14 pour réalimenter la chambre supérieure de dosage sans produire d'effet sur la canalisation secondaire.

Pour vérifier que le piston doseur 12 a bien effectué la totalité de la course de dosage prévue, chaque bouchon 17 et 18 est percé axialement d'un canal de mise à l'atmosphère 23 et 24 qui peut être refermé hermétiquement en fin de course par l'extrémité de la tige 19 ou 20 correspondante, pourvue à cet effet d'un joint approprié, ce qui referme alors de manière étanche la chambre 21 ou 22 correspondante. Il suffit alors d'envoyer un fluide auxiliaire, par exemple de l'air comprimé, par un orifice 25 dans la chambre supérieure 21, ou chambre de lubrification, et de détecter par un moyen approprié que la pression s'établit dans cette chambre pour en déduire que le piston est arrivé au sommet de sa course de lubrification. On opère naturellement de même par une arrivée 26 dans la chambre 22, ou chambre de réarmement, pour vérifier que la course de réarmement du piston 12 s'est effectuée jusqu'à l'extrémité de sa course.

Pour cela, on réunit les diverses chambres de lubrification 21 entre elles au moyen des perçages 25 passant à travers chaque étage, et se raccordant entre les blocs par des canalisations extérieures non représentées. En envoyant un débit d'air limité dans l'ensemble de ces canalisations, raccordé sur un manocontact unique, on peut vérifier, si le contact s'établit, que les fins de course de lubrification sont effectives pour l'ensemble des pistons doseurs. En effet, si un seul d'entre eux n'était pas arrivé à l'extrémité de sa course, la pression ne pourrait pas s'établir dans la canalistion commune 25, ce que le monocontact unique détecterait immédiatement. On opère de même, naturellement, pour les diverses chambres de réarmement 22, qui sont également réunies entre elles par les perçages 26, et de bloc à bloc par des canalisations extérieures, avec là encore une alimentation d'air à débit limité, indépendante de la précédente, mais unique pour l'ensemble des chambres 22, avec également un manocontact indépendant mais unique.

Tout ce qui précède permet, d'une manière fort simple et peu onéreuse, de vérifier que, depuis le distributeur jusqu'au point à graisser 16, la canalisation secondaire 15 n'est pas obturée. Cependant, comme on l'a exposé plus haut, il reste une possibilité que le point à graisser 16 ne reçoive pas la dose de lubrifiant prévue, c'est le cas où la canalisation 15 dans son parcours, ou à l'une quelconque de ces extrémités, présente une fuite de lubrifiant.

C'est pour cela que l'invention prévoit d'utiliser une canalisation secondaire 15 en tube capillaire ou de faible diamètre, raccordé par un embout 27 avec la chambre 28 où débouchent les percements 9 et 14 précédents, et qui est refermée par le raccord vissé 29 servant en même temps à fixer le couvercle 2 sur le corps 1. De même façon, à l'autre extrémité, la canalisation secondaire 15 se raccorde par un embout 30 se montant de manière étanche dans le raccord 31 se vissant sur le point à graisse 16. En outre, conformément à l'invention, on dispose ce tube de faible diamètre 15 à l'intérieur d'un tube enveloppe 32 qui lui-même se raccorde de manière étanche, par exemple par un système de bicône ou tout autre moyen de raccordement, sur le raccord 29 du côté distributeur et sur le raccord 31 du côté point à graisser. Ceci permet d'enfermer l'intervalle compris entre le tube enveloppe 32 et la canalisation secondaire 15 en communication avec une troisième chambre à air 33 constituant une chambre de contrôle de fuite.

Comme pour les chambres à air 21 et 22 précédentes, les chambres à air 33 peuvent avantageusement être réunies entre elles, et à une source d'air et un manocontact pour vérifier qu'il n'y a pas de fuite, ni vers l'extérieur du tube enveloppe 32, ni surtout vers l'intérieur de la canalisation secondaire 15 lorsque l'envoi de lubrifiant a cessé.

Toutefois, conformément à l'invention, il est encore plus simple de réunir chaque chambre 33 de contrôle de fuite d'un étage à la chambre 21 de contrôle de fin de course de lubrification pour permettre d'effectuer les deux contrôles en même temps, à savoir la fin de course de lubrification et l'absence de fuite.

En effet, si une fuite se produit, c'est après la fin de l'injection de lubrifiant, lorsque la pression de lubrifiant dans la canalisation secondaire 15 et le point à graisser chute rapidement, que cette fuite pourra être détectée grâce à la même injection d'air et au même manocontact que celui déjà utilisé pour le premier contrôle.

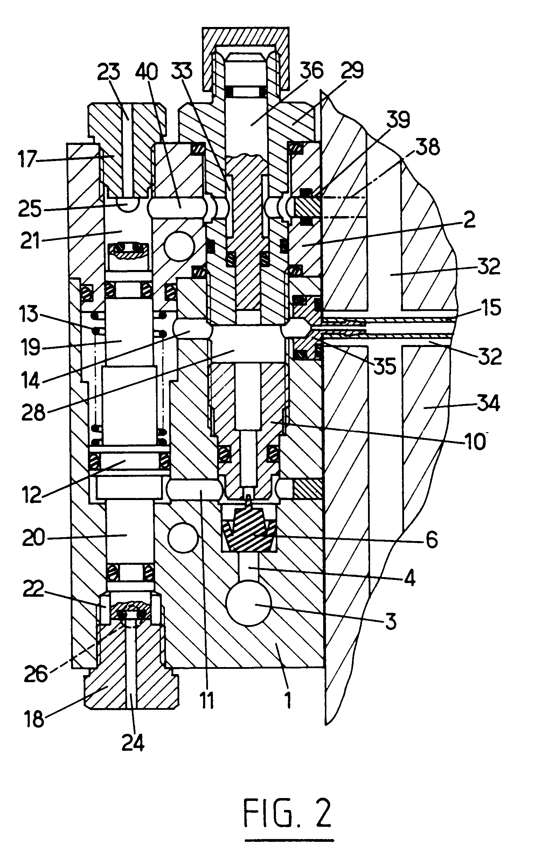

Le tube enveloppe 32 peut avoir une existence réelle, c'est-à-dire être constitué par une canalisation extérieure comme représenté sur la figure 1, ou encore être constitué à l'aide d'un simple perçage 32 pratiqué dans le bâti 34 de la machine à lubrifier comme dans l'exemple de la figure 2. Dans ce cas, la canalisation secondaire 15 se raccorde par un embout spécial 35 sur le côté du corps 1 pour déboucher dans la chambre 28 sensiblement au niveau du percement 14, tandis qu'au contraire, l'embout de raccordement 27 est remplacé par une tige pleine 36 maintenue par un bouchon comme représenté sur la figure 2.

Dans le cas d'utilisation de la figure 1, le logement destiné à l'embout 35 sur le côté du corps 1 est simplement refermé par un bouchon de fermeture 37.

Dans le cas d'utilisation de la figure 2, les divers perçages 32 constituant les tubes-enveloppe peuvent avantageusement être réunis en un réseau de percements raccordés entre eux et raccordés sur la source d'air de contrôle par une canalisation extérieure pour l'ensemble. Ils peuvent également être réunis, tout au moins pour un seul des étages de chaque bloc, à l'aide d'un percement tel que représenté en 38 sur la figure 2 pour déboucher dans le percement 39 du couvercle 2 dans le prolongement du percement 40 réunissant la chambre 21 avec la chambre 33. Un bouchon 41 peut alors être prévu pour fermer tous ces percements 39 lorsqu'ils ne sont pas utilisés comme dans le mode d'utilisation de la figure 1, ou ceux de ces percements qui ne sont pas utilisés dans le mode d'utilisation de la figure 2.

L'invention permet ainsi avec une pression de lubrification modérée, grâce au montage en dérivation des divers étages de dosage, et avec une grande économie de moyens, tant hydrauliques qu'à air comprimé ou électriques, de réaliser un contrôle complet, non sulement de la non obstruction des canalisations secondaires, mais également de l'absence de fuite, assurant ainsi une extrême fiabilité.

En outre, le dispositif est d'une extrême souplesse et permet notamment de modifier une installation existante par addition d'étages supplémentaires, de ne prévoir le contrôle de fuite que sur certaines des canalisations où il paraît nécessaire, et éventuellement de la rajouter par la suite sur celles pour lesquelles il n'a pas été prévu, sans avoir d'importantes modifications à apporter à l'installation.

## Revendications

1. Installation de graissage centralisé, du type comportant un certain nombre d'étages (1-2) réunis en blocs séparés, chaque étage comportant un piston doseur (12) à deux tiges (19, 20) alimenté en dérivation à partir d'une canalisation primaire (3) de lubrifiant mise sous pression par intermittence, et à l'aide d'un clapet à double effet (6), le piston doseur (12) se déplaçant dans une chambre de dosage pendant la phase de lubrification durant laquelle la pression du lubrifiant est établie dans la canalisation primaire (3) et étant rappelé à sa position initiale par un ressort de rappel (13) pendant la phase de réarmement durant laquelle la canalisation primaire (3) est reliée à la décharge, les extrémités de chacune des deux tiges (19, 20) coulissant respectivement dans une chambre de lubrification (21) et une chambre de réarmement (22), ces deux chambres étant alimentées en air et raccordées à l'atmosphère par un percement (23, 24) d'un bouchon de réglage (17, 18) qui se trouve obturé par l'extrémité de la tige correspondante (19, 20) lors de la fin de course correspondante de lubrification et de réarmement du piston (12), les diverses chambres à air de lubrification (21) étant raccordées entre elles et à une source commune d'air à débit limité ainsi qu'à un manocontact commun, tandis que les diverses chambres à air de réarmement (22) sont elles-mêmes raccordées entre elles et à une autre source d'air comprimé à débit limité ainsi qu'à un autre manocontact de contrôle commun, afin de vérifier qu'à la fin de la phase de réarmement et de la phase de lubrification, tous les pistons doseurs ont accompli la totalité de la course prévue, caractérisée par le fait qu'au moins certaines des canalisations secondaires (15) conduisant le lubrifiant chassé par le déplacement du piston doseur (12) vers le point à graisser (16) sont constituées chacune par un tube de faible diamètre disposé à l'intérieur d'un tube enveloppe (32) de plus grand diamètre laissant entre lui et le précédent un intervalle en communication avec une chambre à air de contrôle de fuite (33), ces diverses chambres à air de contrôle de fuite étant à leur tour raccordées entre elles et à un manocontact commun pour contrôler globalement l'absence de fuite de toutes les canalisations secondaires munies d'un tel tube enveloppe.

2. Dispositif selon la revendication 1, caractérisé par le fait qu'à chaque étage, chaque chambre à air de contrôle de fuite (33) est réunie par un passage (40) directement à la chambre à air de lubrification (21) de l'étage correspondant, afin de permettre d'effectuer en une seule opération et avec les mêmes organes les deux contrôles de fin de course de lubrification et d'absence de fuite.

3. Dispositif selon une des revendications précédentes, caractérisé par le fait que ce sont des percements (32) pratiqués dans le bâti (34) de la machine à lubrifier qui jouent le rôle de tube eveloppe (32) en étant réunis par un moyen approprié à l'ensemble des chambres à air de contrôle correspondantes (21, 33), chaque étage étant agencé en conséquence pour supporter les deux types de montage.

**Patentansprüche**

1. Zentralschmieranlage mit einer gewissen Anzahl von in getrennten Blöcken angeordneten, miteinander verbundenen Stufen (1-2), bei der jede Stufe einen Dosierkolben (12) mit zwei Kolbenstangen (19,20) aufweist, der in Abzweigung ausgehend von einer Primär-Schmiermittelleitung (3), die intermittierend unter Druck gesetzt wird, und mit Hilfe eines doppeltwirkenden Klappenventils (6) gespeist wird, wobei sich der Dosierkolben (12) während der Schmierungsphase, während der der Druck des Schmiermittels in der Primärleitung (3) ausgebildet wird, sich in eine Dosierkammer bewegt und durch eine Rückführfeder (13) während der Rückstellphase, während der die Primärleitung (60) mit dem Auslaß verbunden ist, in die Ausgangsstellung zurückgeführt wird, wobei die jeweiligen Enden der beiden Kolbenstangen (19,20) in einer Schmierungskammer (21) bzw. einer Rückstellkammer (22) gleiten, wobei diese beiden Kammern mit Luft gespeist und mit der Atmosphäre über eine Öffnung (23,24) eines Einstellstopfens (17,18) verbunden sind, die durch das Ende der entsprechenden Kolbenstange (19,20) am Ende des entsprechenden Schmierungs- bzw. Rückstellhubes des Kolbens (12) verschließbar ist, und wobei die einzelnen Schmierungs-Luftkammern (21) miteinander und mit einer gemeinsamen Luftquelle mit begrenzter Förderleistung sowie mit einem gemeinsamen Druckschalter verbunden sind, während die einzelnen Rückstell-Luftkammern (22) ihrerseits miteinander und mit einer weiteren Druckluftquelle mit begrenzter Förderleistung sowie mit einem weiteren Druckschalter für eine gemeinsame Kontrolle verbunden sind, um am Ende der Rückstellphase bzw. der Schmierungsphase zu überprüfen, ob alle Dosierkolben den vorgegebenen Gesamthub ausgeführt haben, dadurch **gekennzeichnet**, daß zumindestens einige der Sekundärleitungen (15), die das durch die Bewegung des Dosierkolbens (12) verdrängte Schmiermittel zu der Schmierstelle (16) leiten, jeweils durch ein Rohr mit geringem Durchmesser gebildet sind, das im Inneren eines Hüllrohres (32) mit größerem Durchmesser angeordnet ist, wobei zwischen diesem Hüllrohr und dem erstgenannten Rohr ein Zwischenraum verbleibt, der mit einer Leckverlust-Kontrolluftkammer (33) in Verbindung steht, wobei die einzelnen Leckverlust-Kontrolluftkammern ihrerseits miteinander und mit einem gemeinsamen Druckschalter verbunden sind, um insgesamt das Fehlen von Leckverlusten bei allen Sekundärleitungen zu kontrollieren, die mit einem derartigen Hüllrohr versehen sind.

2. Vorrichtung nach Anspruch 1, dadurch **gekennzeichnet**, daß bei jeder Stufe jede Leckverlust-Kontrolluftkammer (33) über einen Kanal (40) direkt mit der Schmierungs-Luftkammer (21) der entsprechenden Stufe verbunden ist, um es zu ermöglichen, in einem einzigen Vorgang und mit den gleichen Einrichtungen die beiden Kontrollen für das Ende des Schmierungshubes und das Nichtvorhandensein eines Leckverlustes durchzuführen.

3. Vorrichtung nach einem der vorhergehenden Ansprüche, dadurch **gekennzeichnet**, daß in dem Rahmen (34) der zu schmierenden Maschine ausgebildete Öffnungen (32) die Aufgabe des Hüllrohres (32) übernehmen und über geeignete Einrichtungen mit der Gesamtheit der entsprechenden Kontrolluftkammern (21,33) verbunden sind, wobei jede Stufe entsprechend zur Unterstützung der beiden Montagearten ausgebildet ist.

**Claims**

1. Centralised lubrication device, of the type comprising a certain number of stages (1-2) joined together in separate blocks, each stage comprising a dosing piston (12) with two shafts (19, 20) shunt-fed from an intermittently pressurised primary lubricant duct (3), and with the aid of a double acting valve (6), the dosing piston (12) moving in a dosing chamber during the lubrication phase during which the lubrication pressure is established in the primary duct (3) and being returned to its initial position by a restoring spring (13) during the resetting phase during which the primary duct (3) is connected to the outlet, the ends of each of the two shafts (19, 20) sliding respectively into a lubrication chamber (21) and a resetting chamber (22), these two chambers being supplied with air and connected to the atmosphere by an opening (23, 24) in an adjustment plug (17, 18) which is sealed by the end of the corresponding shaft (19, 20) when the corresponding stroke of lubrication and resetting of the piston (12) is finished, the various lubrication (21) air chambers being joined together and to a common air source with limited flow rate as well as to a common manocontact, whilst the various resetting (22) air chambers are themselves joined together and to another source of compressed air of limited flow rate as well as to another common control manocontact, so as to verify that at the end of the resetting phase and of the lubrication phase, all the dosing pistons have carried out the whole of the specified course, characterised in that at least some of the secondary ducts (15) conveying the lubricant driven by the displacement of the dosing piston (12) towards the point to be lubricated (16) are each constituted by a tube of small diameter disposed inside a casing tube (32) of larger diameter leaving between it and the preceding one a gap in communication with an escape control (33) air chamber, these various escape control air chambers in turn being joined together and to a common manocontact to control overall the absence of leakage from all the secondary ducts provided with a casing tube of this type.

2. Device according to claim 1, characterised in that at each stage each escape control (33) air chamber is connected by a passage (40) directly to the lubrication air chamber (21) of the corresponding stage so as to permit the two end-of-lubrication and absence-of-leakage controls to be carried out in a single operation and with the same elements.

3. Device according to one of the preceding claims, characterised in that it is openings (32) made in the structure (34) of the lubricating machine which play the part of casing tube (32) by being joined by appropriate means to the unit of the corresponding control air chambers (21, 33), each stage being consequently arranged to support the two types of assembly.

FIG. 1

FIG. 2